# EUROPEAN PATENT APPLICATION

(11) **EP 0 576 699 A1**
(43) Date of publication of application: **05.01.1994**
(21) Application number: 92111009.4
(22) Date of filing: 29.06.1992
(51) Int. Cl.: B65G 47/92, B65G 7/12, A47L 13/41

(54) **Magnetic pick up tool**

(71) Applicant: Chiu, Ying-Ming, Tie-Ping Shine, Taichung Hsien (TW)
(72) Inventor: Chiu, Ying-Ming, Tie-Ping Shine, Taichung Hsien (TW)
(74) Representative: Grünecker, Kinkeldey, Stockmair & Schwanhäusser Anwaltssozietät

(57) **Abstract**

The present invention provides a magnetic pick up tool which essentially contains a handle (11); an hollow extension arm extending therefrom and having an opening at its free end; a transmitting member (30) having a trigger (31) at one end thereof and a magnet (41) at the other end thereof being slidably received in the hollow extension arm with the magnet close to the opening and the trigger protruding from the hollow extension arm; a non-iron (20) cover for the opening of the hollow extension arm; and a spring (34) being disposed inside the hollow extension arm for biasing the magnet and the non-iron plate in contact with each other. The magnet is able to be pulled away from the non-iron cover as the trigger is pressed by an operator.

## Description

### Background of the Invention

The present invention relates to a tool which can pick up iron-made articles by magnetic force, more particularty to a feature for tool having an extension arm which renders the pick-up of iron-made articles in narrow space easy.

In a general metal working factory, we often can see that small pieces of metal trash generated in the manufacturing operations or small parts such as screws, springs, steel balls, etc. used therein fall into confined space such that the pick-up of the metal trash or small parts become impossible or difficult, or fall into a place where renders the pick-up of these articles dangerous. Similar situations may also happen to small metal articles, for example clippers, nails, needles, etc., used in an office or family house. Up to the present time, people use brooms or things having a long handle to sweep the above-described articles out and pick them up by hand. No appropriate and handy tools are created to easily pick up small iron-made articles which lie on a place where renders the pick-up of these articles difficult or dangerous.

An object of the present invention is to provide a magnetic pick up tool having an extension arm, which can be used to attract and pick up small iron-made articles located in a narrow opening, recess or place where people can not pick them up easily or safely with hand, moreover the articles attracted by the tool can easily be released therefrom.

Another object of the present invention is to provide a magnetic pick up tool having a flexible extension arm, which can be used to attract and pick up small iron-made articles located in a narrow opening, recess or place where people can not pick them up easily or safely with hand, moreover the articles attracted by the tool can easily be released therefrom.

### Summary of the Invention

In carrying out the above objects, the magnetic pick up tool constructed in accordance with the present invention comprises:
a) a non-iron body comprising a handle, and a hollow extension arm extending therefrom and along a line which forms an angle to said handle, wherein a slot for receiving a trigger is provided at a location near the angle, and an opening is provided at the free end of said hollow extension arm;
b) a transmitting member having a trigger at one end (rear end) thereof being slidably mounted inside said hollow extension arm with the trigger protruding from the slot, and the other end (front end) of said transmitting member at a location close to the opening of said hollow extension arm before the trigger being pressed;
c) a magnet having a substantially flat surface and a through hole perpendicular to said flat surface being connected to the transmitting member with its through hole being inserted by the transmitting member and its substantially flat surface in contact with
d) a non-iron cover for the opening of said hollow extension arm; and
e) a spring means being disposed inside the hollow extension arm for biasing the magnet and the non-iron cover in contact with each other; whereby an iron-made small article is able to be attracted and attached to the non-iron cover by magnetic attraction of the magnet, and the attached article will be released from the non-iron cover as the magnet is pulled away from the non-iron cover upon pressing the trigger.

Preferably, the magnetic pick up tool further comprises an iron plate for connecting the magnet to the transmitting member, in which one side of said iron plate is attached by the substantially flat surface of said magnet by magnetic attraction, the opposite side of said iron plate is in intimate contact with the non-iron cover by said spring means, and the front end of said transmitting member passing the through hole of said magnet is fixedly connected to said iron plate.

Preferably, at least part of the hollow extension arm defines an inside longitudinal restricted hole, and the transmitting member is a non-iron rod, such as plastics and aluminum, which has an diameter equivalent to or slightly less than that of the restricted hole such that it is slidably received therein. One end (rear end) of the rod is integrally formed a trigger, and the other end (front end) of the rod is threadly connected to said iron plate.

Preferably, a C-shaped protection ring for the trigger is further provided at the angle with its two ends acrossing the longitudinal sides of said slot, and the trigger is a lever, in which one end of the lever is pivotally connected to the C-shaped protection ring, and the other end of the lever is connected to the transmitting member along a line which forms an angle. More preferably, the transmitting member is a wire, one end of the wire is connected to the lever, and the other end thereof is connected to said iron plate.

Preferably, the hollow extension arm comprises a plurality of uniform hollow members being jointed one another to make a flexible hollow arm, the friction at the joints being sufficient to maintain the shape of the flexible hollow arm, and the transmitting member is a wire which is received in the flexible hollow arm. In one of the preferred embodiments of present invention, the uniform hollow member contains a substantially spherical projecting surface at one end thereof; a corresponding spherical recess at the other end thereof adapted to rotatably lock the substantially spherical projecting surface; and an aperture being penertrated from the projecting surface to the recess, in which every two adjacent uniform members are rotatably locked with each other by coupling the projecting surface of one uniform member with the recess of the other uniform member, and a passage is formed by the apertures of said jointed uniform members, which receives the wire.

### Brief Description of the Drawings

Fig. 1 is a partial sectional view that illustrates the construction of a magnetic pick up tool constructed according to the first embodiment of the present invention;
Fig. 2 is a cross-sectional view taken along the line 6-6 in Fig. 1;
Fig. 3(A), 3(B) and 3(C) are plane views which show different surface shapes of the non-iron cover 20 used in the tool shown in Fig. 1;
Fig. 4 is a partial sectional view that illustrates the construction of a magnetic pick up tool constructed according to the second embodiment of the present invention;
Fig. 5 is a partial sectional view of the lever 50 used in Fig.4 which shows the pivotal connection of the lever 50 and the C-shaped protection ring 14 in Fig. 4;
Fig. 6 is a partial sectional view that illustrates the construction of a magnetic pick up tool constructed according to the third embodiment of the present invention;
Fig. 7 is a cross-sectional view taken along the line 4-4 in Fig. 6;
Fig. 8 is a partial sectional view that illustrates the construction of a magnetic pick up tool constructed according to the fourth embodiment of the present invention;
Fig. 9 is a partial sectional view that illustrates the construction of a magnetic pick up tool constructed according to the fifth embodiment of the present invention;
Fig. 10 is a partial sectional view that illustrates the construction of a magnetic pick up tool constructed according to the sixth embodiment of the present invention;
Fig. 11 is a partial sectional view that illustrates the construction of a magnetic pick up tool constructed according to the seventh embodiment of the present invention; and
Fig. 12 is an enlarged sectional view of the portion A in Fig. 11, which particularly shows the connection between the first uniform member 101' and the body 10 of the magnetic pick up tool shown in Fig. 11.

In the various views, like reference numbers refer to like elements.

### Detailed Description of the Preferred Embodiments

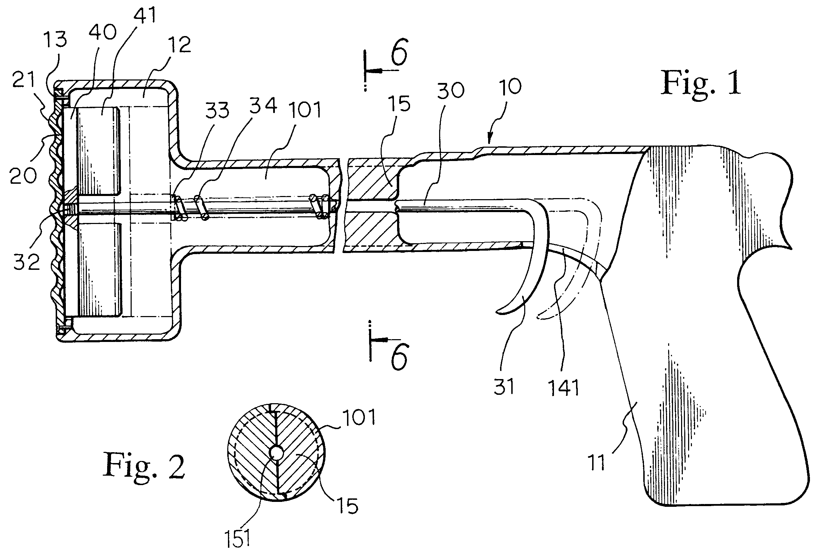

The present invention will be described in greater detail with reference to the accompanying drawings wherein several preferred embodiments of the present invention are set forth. A magnetic pick up tool constructed in accordance with the first embodiment of the present invention is shown in Figs. 1 and 2 of the drawings, which generally comprises a non-iron body 10 including a handle 11, and a hollow extension arm 101 extending therefrom and along a line which forms an angle to said handle, wherein a slot 141 for receiving a trigger is provided at a location near the angle, an enlarged opening 12 is provided at the free end and a section of thick wall 15 defining an inside longitudinal restricted hole 151 at its intermediate portion of said hollow extension arm 101.

A non-iron transmitting rod 30, such as plastic or aluminum rod, having an integrally formed trigger 31 at one end (rear end) thereof and a threaded portion 32 at the other end (front end) thereof is slidably mounted inside said hollow extension arm 101, in which the rod 30 has an diameter equivalent to or slightly less than that of the restricted hole 151 and is slidably received therein with the trigger 31 protruding from the slot 141, and the threaded portion 32 close to the opening of said hollow extension arm before the trigger being pressed.

A magnet 41 having an through hole at its central portion is magnetically attached to an iron plate 40 having a threaded bore at its central portion, in which the through hole and the threaded bore are in alignment with each other. The iron plate 40 together with the magnet 41 are disposed inside the enlarged opening 12 of the extension arm, the through hole of said magnet 41 is inserted by the front end of said transmitting rod 30 and said iron plate 40 is fixedly connected to said transmitting rod 30 with its threaded bore being threadedly engaged with the threaded portion 32 of said transmitting rod 30.

A non-iron rectangular cover 20 which has a corrugated central portion 21 and a flat strip at its four edges corresponding to a flange protruding inward from the enlarged opening 12 of said hollow entension arm is mounted thereon by threading four studs 13 into the receiving holes and threaded bores located at the four corners of the cover 20 and the flange respectively.

A compression spring 34 is disposed inside the hollow extension arm 101 with its axial hole inserted by the transmitting rod 30 for biasing the iron plate 40 and the non-iron cover 20 in contact with each other, in which the compression spring 34 is compressionally bounded between a detent 33 provided on the transmitting rod 30 and the thick wall 15 of the hollow extension arm 101 which forms the restricted hole 151.

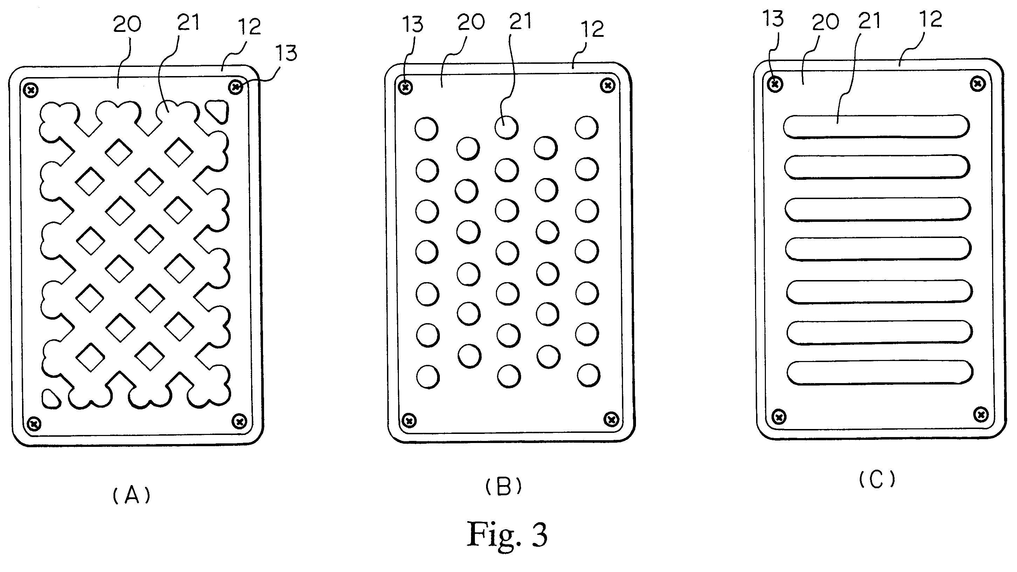

The magnetic pick up tool described above can be used to pick up iron-made small articles which will be attracted by the magnet 41 and attached to the non-iron cover 20 as the front end of the extension arm 101 approachs the iron-made small articles, and the attached articles will be released from the non-iron cover 20 as the magnet is pulled away from the non-iron cover 20 upon pressing the trigger. The corrugated shape of the non-iron cover 20 is to avoid the pick-up articles would not release from the cover due to a vacuum taking place between two intimate contact flat surfaces. Fig. 3 shows different projecting configurations 21 of the cover 20 which can be used in the magnetic pick up tool in Fig. 1 and function the same.

The major reason of using the iron plate 40 to connect the magnet 41 with the transmitting rod 30 is for rendering the manufacturing process easier. Alternatively, the magnet 41 can be directly secured to the front end of the transmitting rod 30 by any suitable means such as screw, adhesion, etc.

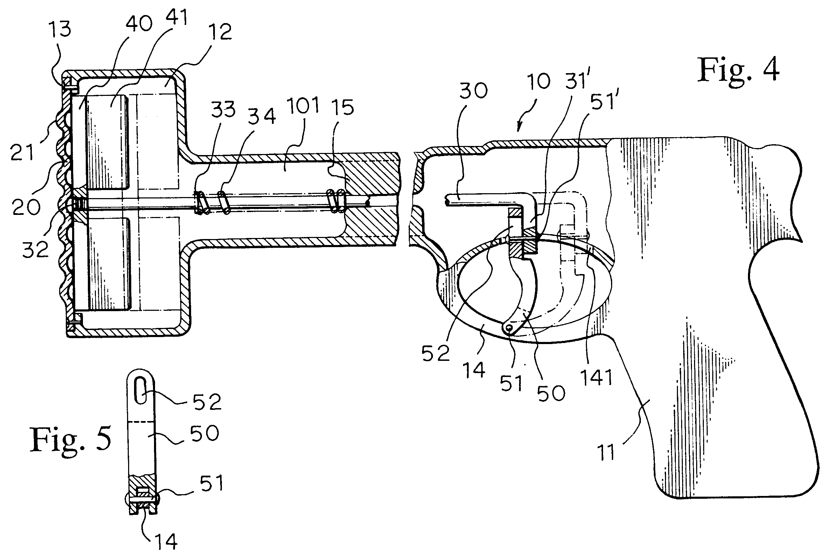

A magnetic pick up tool constructed in accordance with the second embodiment of the present invention is shown in Figs. 4 and 5 of the drawings, which is similar to the magnetic pick up tool shown in Figs. 1 and 2 except that an additional C-shaped protection ring 14 for the trigger is further provided at the angle with its two ends acrossing the longitudinal sides of said slot 141, the rear end of the transmitting rod 30 is bent downwardly to form a vertical portion 31', and the trigger is a lever 50, in which the lower end of the lever 50 is pivotally connected to the C-shaped protection ring 14 by a pin 51, and the upper end of the lever 50 having a vertical slit 52 is slidably connected to the vertical portion 31' of said transmitting rod 30 by inserting a pin 51' provided on the vertical portion 31' into said slit 52.

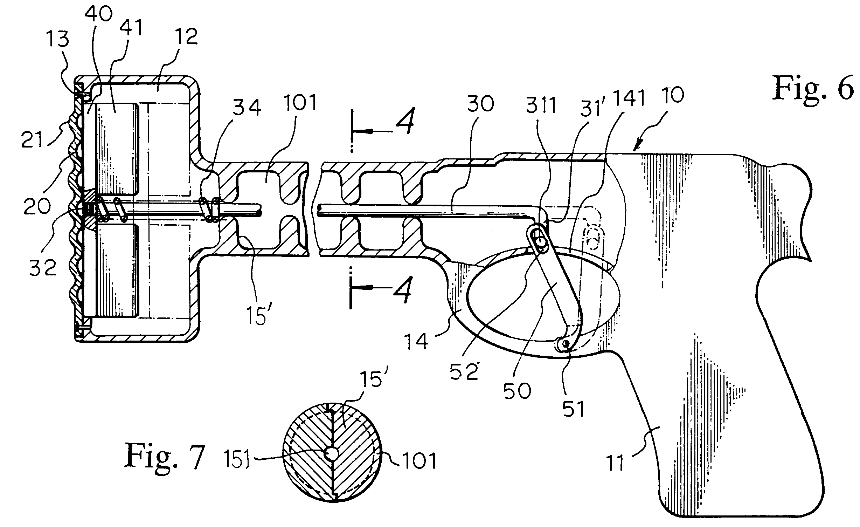

Figs. 6 and 7 of the drawings show a magnetic pick up tool constructed in accordance with the third embodiment of the present invention, which is similar to that shown in Figs. 4 and 5 except that the restricted hole 151 is formed by several spaced flanges 15' protruding inwardly from the hollow extension arm 101 instead of the thick wall 15, and the compression spring 34 is compressionally bounded between the iron plate 40 and the flange 15' instead of the detent 33 and the thick wall 15, and an upright post 311 is provided on the vertical portion 31' to slidably connect the lever 50 with the vertical portion 31'.

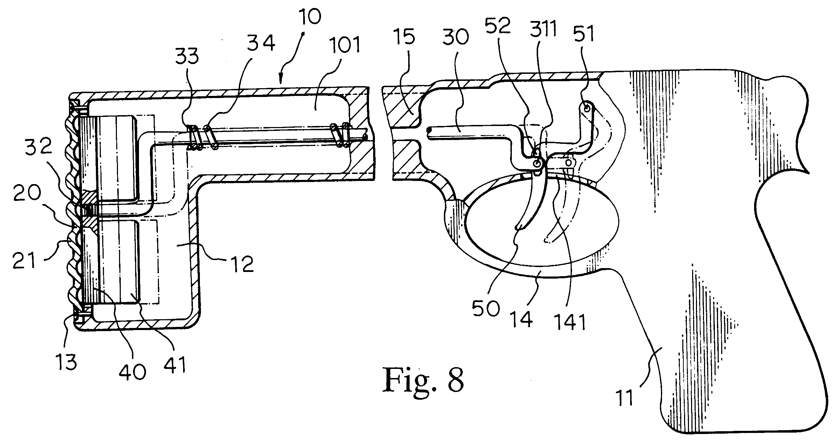

Fig. 8 of the drawings show a magnetic pick up tool constructed in accordance with the fourth embodiment of the present invention, which is similar to that illustrated in Figs. 4 and 5 except that the enlarged opening 12 is shifted to a lower position and the fulcrum of the lever 50 is moved to the upper end thereof. As shown in Fig. 8, the front end of the transmitting rod 30 is modified to a crank shape such that the threaded portion 32 is at or close to the center of the enlarged opening 12. The upper end of the lever 50 is pivotally connected to the body 10 by a pin 51, the intermediate portion thereof having a first slit 52 where an upright post 311 provided on the rear end of the transmitting rod 30 is slidably received, and the lower end thereof is free.

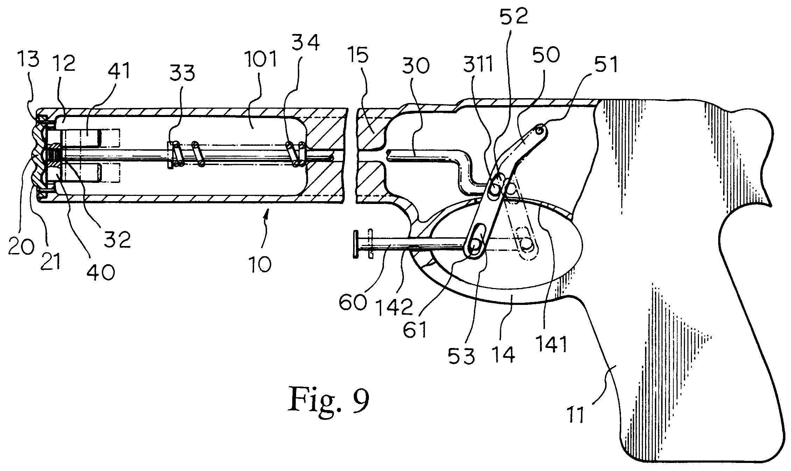

Fig. 9 of the drawings show a magnetic pick up tool constructed in accordance with the fifth embodiment of the present invention, which is similar to that illustrated in Fig. 8 except that the opening 12 is not enlarged and in a straight line with the rest part of the hollow extension arm 101, an additional horizontal press member 60 having a flatten head at its front end and an upright post 61 at its rear end is supported by a hole 142 located at the front portion of the C-shaped ring 14, and the upright post 61 is slidably received in a second slit 53 provided on the lower end of the lever 50. In this embodiment, the flatten head of the press member 60 is the place to be pressed by the operator to release the attached articles from the cover 20.

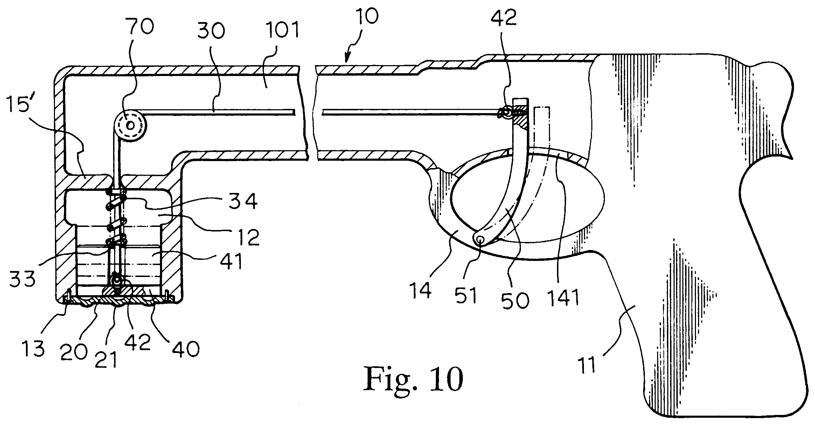

Fig. 10 of the drawings show a magnetic pick up tool constructed in accordance with the sixth embodiment of the present invention, which is similar to that illustrated in Fig. 6 except that the front end of said hollow extension arm 101 is perpendicular to the rest part of said hollow extension arm 101, the transmitting rod is now a wire 30 which is bent according to the shape of the extension arm 101, only one protruding flange 15' is provided inside the front end of said transmitting arm 101, and the compression spring 34 is compressionally bounded between the flange 15' and the magnet 41, in which a pair of coupling members 42 having a screw at one end thereof which is adapted to be threaded into the lever 50 or the iron plate 40 and a ring at the other end thereof which is adapted to be tied by the wire 30 are used to connect the two ends of said wire 30 with the lever 50 and with the iron plate 40, and a roller 70 on which the wire 30 is bent is mounted inside the hollow extension arm 101 and at a position such that the wire 30 is parallel to the wall of said hollow extension arm 101.

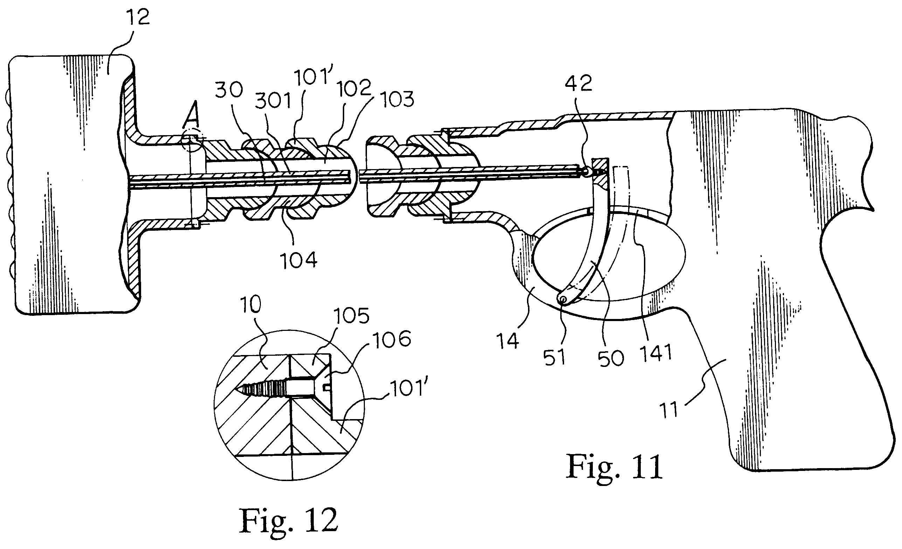

Fig. 11 of the drawings show a magnetic pick up tool constructed in accordance with the seventh embodiment of the present invention, which is similar to that illustrated in Fig. 9 except that the hollow extension arm 101 comprises a plurality of uniform hollow members 101' being jointed one another to make a flexible hollow arm, and the friction at the joints being sufficient to maintain the shape of the flexible hollow arm. The uniform hollow member 101' contains a substantially spherical projecting surface 103 at one end thereof; a corresponding spherical recess 104 at the other end thereof adapted to rotatably lock the substantially spherical projecting surface; and an aperture 102 being penertrated from the projecting surface to the recess. Every two adjacent uniform members 101' are rotatably locked with each other by coupling the projecting surface 103 of one uniform member with the recess 104 of the other uniform member, and a passage is formed by the apertures 102 of said jointed uniform members, which receives the wire 30. The last and the first uniform member 101' of the flexible hollow arm having a flange 105 projecting outwardly on the outer surface thereof are fixedly connected to the body 10 by threading screws 106 into the flanges 105 and the body 10, as shown in Fig. 12. The wire 30 is further enclosed in a flexible plastic or rubber tube 301 which can prevent the wire 30 from being in direct contact with the uniform members 101' as the flexible hollow arm is bent.

## Claims

1. A magnetic pick up tool, which comprises:
a) a non-iron body comprising a handle, and a hollow extension arm extending therefrom and along a line which forms an angle to said handle, wherein a slot for receiving a trigger is provided at a location near the angle, and an opening is provided at the free end of said hollow extension arm;
b) a transmitting member having a trigger at one end (rear end) thereof being slidably mounted inside said hollow extension arm with the trigger protruding from the slot, and the other end (front end) of said transmitting member at a location close to the opening of said hollow extension arm before the trigger being pressed;
c) a magnet having a substantially flat surface and a through hole perpendicular to said flat surface being connected to the transmitting member with its through hole being inserted by the transmitting member and its substantially flat surface in contact with
d) a non-iron cover for the opening of said hollow extension arm; and
e) a spring means being disposed inside the hollow extension arm for biasing the magnet and the non-iron cover in contact with each other.

2. The magnetic pick up tool according to claim 1 which further comprises an iron plate for connecting the magnet to the transmitting member, in which one side of said iron plate is attached by the substantially flat surface of said magnet by magnetic attraction, the opposite side of said iron plate is in intimate contact with the non-iron cover by said spring means, and the front end of said transmitting member passing the through hole of said magnet is fixedly connected to said iron plate.

3. The magnetic pick up tool according to claim 2, wherein at least part of the hollow extension arm defines an inside longitudinal restricted hole, the transmitting member is rod having an diameter equivalent to or slightly less than that of the restricted hole such that it is slidably received therein, one end (rear end) of the rod is integrally formed a trigger, and the other end (front end) of the rod is threadly connected to said iron plate.

4. The magnetic pick up tool according to claim 2, wherein a C-shaped protection ring for the trigger is further provided at the angle with its two ends acrossing the longitudinal sides of said slot, and the trigger is a lever, in which one end of the lever is pivotally connected to the C-shaped protection ring, and the other end of the lever is connected to the transmitting member along a line which forms an angle.

5. The magnetic pick up tool according to claim 4, wherein the transmitting member is a wire, one end of the wire is connected to the lever, and the other end thereof is connected to said iron plate.

6. The magnetic pick up tool according to claim 5, wherein the hollow extension arm comprises a plurality of uniform hollow members being jointed one another to make a flexible hollow arm, the friction at the joints being sufficient to maintain the shape of the flexible hollow arm, and the wire is received in the flexible hollow arm.

7. The magnetic pick up tool according to claim 6, wherein the uniform hollow member contains a substantially spherical projecting surface at one end thereof, a corresponding spherical recess at the other end thereof adapted to rotatably lock the substantially spherical projecting surface, and an aperture being penertrated from the projecting surface to the recess, in which every two adjacent uniform members are rotatably locked with each other by coupling the projecting surface of one uniform member with the recess of the other uniform member, and a passage is formed by the apertures of said jointed uniform members, which receives the wire.
